# EUROPÄISCHE PATENTSCHRIFT

(11) **EP 0 501 983 B1**
(45) Veröffentlichungstag und Bekanntmachung des Hinweises auf die Patenterteilung: **28.12.1994**
(21) Anmeldenummer: 90916456.8
(22) Anmeldetag: 17.11.1990
(51) Int. Cl.: A61C 13/00

(54) **VERFAHREN ZUR HERSTELLUNG EINER ZAHNPROTHESE**
PROCESS FOR MAKING A DENTAL PROSTHESIS
PROCEDE DE FABRICATION D'UNE PROTHESE DENTAIRE

(30) Priorität: 20.11.1989 DE 3938495; 09.01.1990 DE 9000174 U; 27.02.1990 DE 4006088; 19.03.1990 DE 4008718; 27.06.1990 DE 4020433; 14.08.1990 DE 4025728
(43) Veröffentlichungstag der Anmeldung: 09.09.1992
(73) Patentinhaber: BECKER, Wolfgang, D-34260 Kaufungen (DE)
(72) Erfinder: BECKER, Wolfgang, D-34260 Kaufungen (DE)
(74) Vertreter: Walther, Horst, Dipl.-Ing.
(86) Internationale Anmeldenummer: DE9000885
(87) Internationale Veröffentlichungsnummer: WO9107141

(56) Entgegenhaltungen:
- DE-A- 3 442 158
- DE-A- 3 604 531
- FR-A- 2 582 932

## Beschreibung

Die Erfindung betrifft ein Verfahren zur Herstellung einer Zahnprothese, insbesondere einer Totalprothese mit einer Ober- und/oder Unterkieferbasis mit Hilfe einer Fräseinrichtung, gemäß dem Obergriff von Anspruch 1.

Aus der DE-OS 36 04 531 ist ein Verfahren zur Herstellung von Kronen, Brücken u.a. Zahnersatzteilen mittels einer Kopierfräseinrichtung bekannt. Hierbei wird ein Gipsmodell abgetastet und die hierbei ermittelten Daten einer Fräseinrichtung übergeben.

Aus der FR-OS 25 82 932 ist ebenfalls ein Verfahren gemäß dem Oberbegriff von Anspruch 1 bekannt, bei dem ausgehend von vorgeformten Basen diese Basen durch Endbearbeitung an die Form und Kontur der Mundhöhle des jeweiligen Patienten angepaßt werden sollen.

Dieses dort beschriebene Verfahren hat sich als praxisfremd herausgestellt, u.a. weil der menschliche Kiefer ähnlich dem Daumenabdruck eines Menschen, eine hohe Individualität aufweist. D.h. es gibt keine zwei übereinstimmenden Kiefer, die es gestatten würden, bei der Herstellung einer Prothese von einem einzigen Vorformling auszugehen.

Dieses aus der FR-OS 25 82 932 bekannte Verfahren wird somit nicht angewendet; tatsachlich werden Zahnprothesen nach wie vor wie folgt hergestellt: Es wird ein Abdruck vom Mund des Patienten genommen. Von diesem Abdruck wird ein individueller Löffel erstellt, mit dem wiederum ein Abdruck im Mund des Patienten genommen wird. D.h. von dem Abdruck wird ein Gipsmodell erstellt, von dem der individuelle Löffel hergestellt wird. Auf der Grundlage dieses zweiten Abdruckes wird wiederum ein Gipsmodell erstellt, auf dem die Zähne in Wachs aufgestellt werden. In einer Küvette wird dann auf der Grundlage dieses Gipsmodelles diese Basis hergestellt. Die Basis besteht aus einer Kunststoffmischung aus einem Polymer und einem Monomer. Hierbei liegen die Kunststoffe als Ausgangsmaterial in plastischer bzw. flüssiger Form vor.

Zur Erstellung einer Prothese werden die Kunststoffe daher gemischt, und die teigige Masse in eine Küvette gestopft oder gepreßt, in der die Kunststoffmasse aushärtet. Bei dieser Vorgehensweise treten folgende Probleme auf:
1. Abdrucknahme
   Die exakte Erfassung der Kiefer mit der in Funktion befindlichen Grenzschleimhaut erweist sich oft als sehr schwierig und oftmals sogar als unmöglich, da häufig bereits die Voraussetzungen für eine exakte Erfassung nicht gegeben sind.
   Durch schlecht sitzende Prothesen, und zwar durch okklusale Störungen, schlecht saugende Basen, die zum Teil durch Haftpulver notdürftig gehalten werden, ist das Prothesenlager (Schleimhaut) durch Entzündungen und Druckstellen meist in einem sehr schlechten Zustand. Auf einer solchen gestreßten Schleimhaut, die die alte Prothese hinterläßt, werden häufig die Abdrücke für eine neue Prothese genommen.
   Eine weitere Fehlerquelle tritt auf, wenn der Speichelfluß während der Abdrucknahme nicht abgestellt werden kann. Der Speichel sammelt sich zwischen Schleimhaut und Abdruck und macht somit eine genaue Abdrucknahme unmöglich.
   Die Gipsmodelle der anatomischen Abdrücke sind dadurch meistens ungeeignet exakte individuelle Löffel wiederzugeben, mit denen der Abdruck für die Basis hergestellt wird, da oft wichtige Teile nicht exakt erfaßt wurden; es entstehen überdimensionierte oder unterdimensionierte Funktionsränder, es werden Kieferteile nicht erfaßt; teilweise ist auch der Löffel durchgedrückt.
   Auch die Verwendung falscher Abdruckmaterialien und Abdrucksysteme sind als Fehlerquellen zu nennen.
   Die Zugabe von Katalysatoren, die Einbeziehung der Raumtemperatur sowie das richtige Anmischen des Abdruckmaterials wird oft nicht korrekt gehandhabt. Die gleichmäßige Verteilung des Abdruckes auf dem individuellen Löffel ist ebenso von Bedeutung wie die nachfolgende Funktionsabformung und Ruhestellung bis zum Aushärten des Materials.
2. Gipsmodelle
   Volumenveränderungen des Gipses und Fertigungsfehler führen zu Ungenauigkeiten, z.B. Wasser- Gipsverhältnis, Nichtbeachten der Quellzeit, Anrühren nicht unter Vakuum, unsachgemäße Lagerung des Abdruckes während und nach dem Abbindevorganges.
3. Kunststoffe
   Alle Kunststoffe schrumpfen beim Polymerisieren mehr oder weniger. Die Folge davon ist, daß Spannungen auf das Modell übertragen werden, und nach Entfernen der Prothese von dem Modell diese Spannungen aufgehoben werden; in diesem Moment ist aber keine exakte Passung auf dem Gipsmodell mehr vorhanden. Daraus resultieren Veränderungen der aufgestellten Zähne und somit der Okklusion und Artikulation.
   Durch diese Ungenauigkeiten können Parafunktionen und Kiefergelenkserkrankungen bei dem Patienten entstehen, ebenso Druckstellen durch die Instabilität der Prothese und hierdurch ein beschleunigter Abbau des Kiefers.
   Außerdem kann das Restmonomer des Gewebes zu Allergien führen.
   Nicht homogene Kunststoffe bilden Räume für Ablagerungen und somit Nistplätze für Bakterien.
4. Unterkieferrelationsbestimmung
   Bißnahmen werden häufig falsch durchgeführt, da sie meistens nachträglich nicht kontrolliert und durch einseitigen Frühkontakt der Bißregistrate der Unterkiefer lateral und protrusiv verlagert wird. Sie führen zwangsläufig zu Verschiebungen der Kiefergelenke und ungleichmäßiger Belastung der darunterliegenden Schleimhaut.
   Da die Bißschablonen im Mund oft nicht saugen, wird die Bißnahme erschwert und fordert von dem Behandler ein hohes Maß an Geschicklichkeit, um diesen Fehler auszugleichen; insbesondere, da der Patient das Gefühl hat, daß die Bißschablone herunterfällt.
   Beim Stützstiftsystem hebt sich zwangsläufig durch die erhebliche Verdrängung der Zunge durch die Registratplatten das Gleichgewicht der Kräfte der im Gleichklang stehenden Muskel und Bänder auf, so daß ein unnatürlicher Bewegungsablauf bei der Pfeilwinkelaufzeichnung hervorgerufen wird.
5. Keine Kongruenz der Situation Mund/Artikulator
   Da die einzelnen Arbeitsgänge an Gegenständen, also Modellen, Löffeln und Basen mit unterschiedlichen Materialienen durchgeführt werden, entstehen zum einen hierdurch und durch das dadurch bedingte häufige Umsetzen Übertragungsfehler, d.h. daß insbesondere die Mundsituation nicht gleich Artikulatorsituation ist.

Der Erfindung liegt daher die Aufgabe zugrunde, ein Verfahren zur Verfügung zu stellen, mit der eine Prothese hergestellt werden kann, bei der die oben genannten Nachteile vermieden sind.
Erfindungsgemäß wird zur Lösung der Aufgabe vorgeschlagen, daß die jeweilige Basis aus einem Kunststoffblock ausgefräst wird, wobei von den die Kontur und Topographie kennzeichnenden Daten der Mundhöhle ein Positivdatensatz erstellt wird, wobei zu diesem Positivdatensatz ein Negativdatensatz dadurch erstellt wird, daß von der Gesamthöhe des Kunststoffblockes die erstellten Daten des Positivdatensatzes und die vorbestimmte Materialstärke der Basis abgezogen wird, und daß die beiden Datensätze der Steuereinrichtung der Fräseinrichtung übergeben werden.

D.h., es wird von dem vorhandenen Positivdatensatz, und der Kenntnis der Materialstärke der Basis nun im Rahmen eines in einer Datenverarbeitungseinheit bestehenden Ablaufprogrammes der Negativdatensatz berechnet. Durch den Negativdatensatz ist die der einen Oberfläche gegenüberliegende Oberfläche der jeweiligen Basis bestimmt. Die Berechnung der Oberfläche aufgrund des Negativdatensatzes im Rahmen des Ablaufprogrammes erfolgt nun derart, daß zu den Daten des Datensatzes, die die Kontur und Topographie der Mundhöhle in dem Bereich der Basis kennzeichnen, die entsprechende Materialstärke der Basis hinzuaddiert wird und durch diesen so erhaltene Datensatz die Topographie und Kontur der gegenüberliegende Seite der Basis vorgegeben ist.

Die Ermittlung der Kontur und Topographie kann hierbei mittels eines Abdruckes erfolgen, wobei der Abdruck ähnlich bei einem Kopierfräsvorgang durch eine entsprechende Abtasteinrichtung abgetastet wird.

Durch die Fräsung der Basis aus einem Kunststoffblock bestehen keinerlei Beschränkungen hinsichtlich der Form der herzustellenden Basis, d.h. es kann die Basis für jeden Kiefer entsprechend der Kontur und Topographie des Kiefers nachgearbeitet werden. Die Bearbeitung erfolgt hierbei beidseitig, also sowohl kiefer- als auch mundseitig, so daß in jedem Fall die Erstellung einer Basis möglich ist, bei der die Stärke im Bereich des von der Zunge erfaßbaren Raumes gleich ist, so daß keine Störungen im biomechanischem Gleichgewicht zwischen Zunge, Wange und Zähnen hervorgerufen werden, wie dies im Gegensatz dazu in einer Basis der Fall sein würde, die gerade in diesem Bereich unterschiedliche Stärken aufweist.

Das Einartikulieren der Prothese erfolgt durch Einsetzen der gefrästen Basis bzw. der Basen in einen Artikulator, wobei der Artikulator ein Aufnahmeelement für die jeweilige Basis aufweist, wobei zwischen Basis und Aufnahmeelement Fixiermittel, z.B. Gips vorgesehen sind. Nach dem Stand der Technik wurden hierfür bislang Modelle benutzt, die von Abdrücken hergestellt wurden; das Modell bildet die Grundlage für einen Wachsaufbau mit darin eingesetzten Zähnen. Dieses Modell mit den Zähnen wird dann in eine Küvette eingesetzt und die Prothese aus einer Monomer-Polymermischung erstellt, wie dies eingangs beschrieben worden ist. Da die Kunststoffmasse die Eigenschaft hat beim Aushärten zu schrumpfen, folgt hieraus, daß das Prothesenunterteil nicht mehr identisch ist mit dem Abdruck bzw. mit dem Modell, der beim Patienten genommen worden ist, und der die Grundlage für die Erstellung des Prothesenunterteils gebildet hat, das prinzipiell identisch mit der Basis ist. Infolgedessen konnte auch die Einartikulation mit auf der Grundlage solcher Basen hergestellter Modelle nur sehr ungenau vorgenommen werden.

Nach einem weiteren besonderen Merkmal der Erfindung dient die nach dem erfindungsgemäßen Verfahren hergestellte Basis als Ausgangsprodukt für die folgenden weiteren Arbeitsgänge zur Erstellung der Prothese. Dies sind:
1. Erstellung der Ober- und Unterkieferwälle, beispielsweise aus Dentalhartwachs, für die Bißregistrierung;
2. Zentrikregistrierung, d.h. Optimierung der Stellung von Ober- zu Unterkiefer;
3. Einartikulation des Registrats gemäß Punkt 2 mit dem Unterkiefer;
4. Aufstellung der gesamten Zähne in Wachs zur Anprobe;
5. Überprüfung der Ästhetik und der Phonetik;
6. Einbetten der in Wachs aufgestellten Zähne mit Basis in eine Küvette, wobei die Zähne mit der Basis durch eine Kunststoffmasse verbunden werden.

Nach dem Stand der Technik wurden diese oben beschriebenen Arbeitsgänge, die im wesentlichen Einrichtvorgänge darstellen, mit Hilfe der Modelle durchgeführt, die die Grundlage für die Herstellung der Basis gebildet haben. Die Modelle, die aus Gips hergestellt wurden, waren nicht formgenau, da Gips beim Härten expandiert.

Es ist unmittelbar einsichtig, daß die Maßhaltigkeit bei dieser Vorgehensweise nicht gewährleistet ist. Folglich ergeben sich auch Fehler bei diesen Einrichtvorgängen.

Das Auftreten derartiger Fehler ist ausgeschlossen, wenn diese oben genannten Einrichtvorgänge mit einer fertig gefrästen Basis durchgeführt werden.

Eine Optimierung der Prothese hinsichtlich ihrer Sitz- und Paßgenauigkeit ist durch die Einflechtung eines oder mehrerer der folgenden Arbeitsgänge möglich:
1. Daß nach Verfahrensschritt 1
   die Basis des Oberkiefers mit Hilfe eines Gesichtsbogens schädelbezüglich in einen individuellen Artikulator eingesetzt wird;
2. daß nach Verfahrensschritt 3
   der Protrusionsscheckbiß zur Einstellung der Gelenkbahnneigung erfolgt; d.h. die Neigung der Gelenkbahn des Schädels wird auf den Artikulator übertragen, und daß zur Ermittlung der Kauebene der Zungenäquator abgeformt wird;
3. daß nach Verfahrensschritt 5
   eine muskuläre Außenabformung vestibulär im Bereich vom dritten bis sechsten Ober- und Unterkieferzahn vorgenommen wird, d.h. die Prothese wird an den Muskel adaptiert.

Im Anschluß an diese Arbeitsschritte erfolgt die Fertigstellung der Prothese durch Verbinden der Zähne mit der Basis mit Hilfe eines Kaltpolymerisates. Hieran anschließend erfolgt das sogenannte Reokludieren, d.h. es erfolgt das Nachregulieren der Zahnstellung im Artikulator durch Einschleifen der Zähne. Der letzte Schritt besteht im Einsetzen der Prothese in den Mund des Patienten.

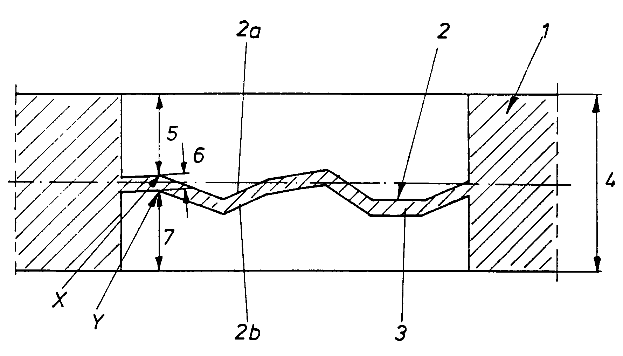

Das Verfahren zur Herstellung der Basis für eine Zahnprothese mit Hilfe einer Fräsvorrichtung wird anhand der Zeichnung nachstehend näher erläutert.

Zur Erläuterung des Verfahrens wird davon ausgegangen, daß zunächst von Ober- und Unterkiefer jeweils eine Aufnahme erstellt wird. Aus den Aufnahmen können die Daten für den Konstruktionsplan ermittelt werden, aufgrund dessen die Registratbasen mit Hilfe einer Fräsmaschine gefräst werden.

Mit 1 ist hierbei der Kunststoffblock als Rohling bezeichnet, und insgesamt mit 2 die aus dem Kunststoffblock herausgefrästen Oberflächenstruktur für die Basis 3 einer Zahnprothese. Anhand des Punktes X soll auf der mit 2a bezeichneten positiven Oberfläche dargestellt werden, wie die entsprechende negative Oberflächenstruktur 2b durch -entsprechend Punkt Y- den Rechenvorgang ermittelt wird. Ausgegangen wird hierfür von der Gesamthöhe 4 des Kunststoffblockes; ausgehend von der Oberkante des Kunststoffblockes wird die beispielsweise durch die Abtasteinrichtung ermittelte Lage des Punktes X der Oberfläche in dem Speicher der Datenverarbeitungsanlage abgelegt. Die Lage des Punktes X ist gekennzeichnet durch die Höhe 5 bezogen auf die Oberkante des Kunststoffblockes. Zu der Höhe 5 wird die mit 6 bezeichnete Materialstärke addiert.

Der durch die Addition erhaltene Wert wird von der Gesamthöhe 4 Kunststoffblockes abgezogen, so daß sich hierdurch die entsprechende Höhe 7 zu dem dem Punkt X gegenüberliegenden Punkt Y auf der Negativseite ergibt. In der oben beschriebenen Weise werden die die Basis kennzeichnenden Daten rasterförmig errechnet und die Basis entsprechend gefräst.

## Patentansprüche

1. Verfahren zur Herstellung einer Zahnprothese, insbesondere einer Totalprothese mit einer Ober- und/oder Unterkieferbasis mit Hilfe einer Fräseinrichtung
**dadurch gekennzeichnet,** daß
die jeweilige Basis (3) aus einem Kunststoffblock(1) ausgefräst wird, wobei von den die Kontur und Topographie kennzeichnenden Daten der Mundhöhle ein Positivdatensatz erstellt wird, wobei zu diesem Positivdatensatz ein Negativdatensatz dadurch erstellt wird, daß von der Gesamthöhe (4) des Kunststoffblockes (1) die erstellten Daten des Positivdatensatzes und die vorbestimmte Materialstärke (6) der Basis (3) abgezogen wird, und daß die beiden Datensätze der Steuereinrichtung der Fräseinrichtung übergeben werden.

2. Verfahren nach Anspruch 1
**dadurch gekennzeichnet,** daß
zur Ermittlung der Kontur und Topographie ein Abdruck genommen wird.

3. Verfahren nach Anspruch 1
**dadurch gekennzeichnet,** daß
die gefräste Basis zum Einartikulieren der Prothese, in den Artikulator eingesetzt wird.

4. Verfahren nach Anspruch 3
**dadurch gekennzeichnet,** daß
der Artikulator ein Aufnahmeelement für die Basis aufweist, wobei zwischen Basis und Aufnahmeelement Fixiermittel, z.B. Gips vorgesehen sind.

5. Verfahren nach Anspruch 1
**dadurch gekennzeichnet,** daß
folgende Arbeitsgänge zur Erstellung der Prothese mit der Basis durchgeführt werden:
1. Erstellung der Ober- und Unterkieferwälle, beispielsweise aus Dentalhartwachs, für die Bißregistrierung;
2. Zentrikregistrierung, d.h. Optimierung der Stellung von Ober- zu Unterkiefer;
3. Einartikulieren des Registrates gemäß Punkt 2 mit dem Unterkiefer;
4. Aufstellung der gesamten Zähne in Wachs zur Anprobe;
5. Überprüfung der Ästhetik und der Phonetik;
6. Einbetten der in Wachs aufgestellten Zähne mit Basis in eine Küvette, wobei die Zähne mit der Basis durch eine Kunststoffmasse verbunden werden.

6. Verfahren nach Anspruch 5
**dadurch gekennzeichnet,** daß
nach Verfahrensschritt 1 die Basis des Oberkiefers mit Hilfe eines Gesichtsbogens schädelbezüglich in einen individuellen Artikulator eingesetzt wird.

7. Verfahren nach Anspruch 5
**dadurch gekennzeichnet,** daß
nach Verfahrensschritt 3 der Protrusionsscheckbiß zur Einstellung der Gelenkbahnneigung erfolgt; d.h. die Neigung der Gelenkbahn des Schädels wird auf den Artikulator übertragen.

8. Verfahren nach Anspruch 7
**dadurch gekennzeichnet,** daß
zur Ermittlung der Kauebene der Zungenäquator abgeformt wird.

9. Verfahren nach Anspruch 5
**dadurch gekennzeichnet,** daß
nach Verfahrensschritt 5 eine muskuläre Außenabformung vestibulär im Bereich vom dritten bis sechsten Ober- und Unterkieferzahn vorgenommen wird, d.h. die Prothese wird an den Muskel adaptiert.

## Claims

1. Process for making a dental prothesis, especially a total prothesis with an upper and/or lower jaw base, with the aid of a milling device, characterised thereby that the respective base (3) is milled out of a synthetic material block (1), wherein a positive set of data is draw up from the data, which characterises the contour and topography, of the oral cavity, wherein a negative set of data is drawn up in addition to this positive data set thereby that it is deduced from the overall height (4) of the synthetic material block (1), the drawn-up data of the positive data set and the predetermined material thickness (6) of the base (3), and that the two data sets are delivered to the control equipment of the milling device.

2. Process according to claim 1, characterised thereby that an impression is taken for ascertaining the contour and topography.

3. Process according to claim 1, characterised thereby that the milled base is inserted into the articulator for articulation-in of the prothesis.

4. Process according to claim 1, characterised thereby that the articulator has a receiving element for the base, wherein fixing means, for example gypsum, are provided between base and receiving element.

5. Process according to claim 1, characterised thereby that the following working procedures are carried out for the setting up of of the prothesis with the base:
1. Creation of the upper and lower jaw walls, for example from dental hard wax, for bite registration;
2. Centric registration, i.e. optimisation of upper to lower jaw;
3. Articulation-in of the registration according to point 2 by the lower jaw;
4. Setting up of the entire teeth in wax for fitting;
5. Checking of aesthetics and phonetics;
6. Bedding in of the teeth, set up in wax, with base in a cuvette, wherein the teeth are connected with the base by a synthetic material mass.

6. Process according to claim 5, characterised thereby that after process step 1 the base of the upper jaw is inserted with respect to skull into an individual articulator with the aid of a face curve.

7. Process according to claim 5, characterised thereby that after process step 3 the protrusion check bite is carried out for setting of the hinge path inclination; i.e. the inclination of the hinge path of the skull is transferred to the articulator.

8. Process according to claim 7, characterised thereby that the tongue equator is modelled for ascertaining the mastication plane.

9. Process according to claim 5, characterised thereby that after process step 5 a muscular external model is undertaken vestibularly in the region of the third to sixth upper and lower jaw tooth, i.e. the prothesis is adapted to the muscle.

## Revendications

1. Procédé de fabrication d'une prothèse dentaire, notamment d'une prothèse totale pourvue d'une base de mâchoire supérieure et/ou de mâchoire inférieure, à l'aide d'une unité de fraisage, **caractérisé** en ce que l'on réalise ladite base (3) par fraisage d'un bloc de matière synthétique (1), et dans lequel on détermine un jeu de données positives à partir des données caractérisant le contour et la topographie de la cavité buccale, et l'on détermine un jeu de données négatives pour ce jeu de données positives en retranchant de la hauteur totale (4) du bloc de matière synthétique (1) les données déterminées du jeu de données positives et l'épaisseur prédéterminée (6) de la matière de la base (3), et en ce que l'on délivre les deux jeux de données à l'unité de commande de l'unité de fraisage.

2. Procédé selon la revendication 1, **caractérisé** en ce que l'on prend une empreinte pour déterminer le contour et la topographie.

3. Procédé selon la revendication 1, **caractérisé** en ce que l'on place la base fraisée dans l'articulateur pour articuler la prothèse.

4. Procédé selon la revendication 3, **caractérisé** en ce que l'articulateur comporte un élément de support pour la base et en ce que des moyens de fixation, notamment du plâtre, sont prévus entre la base et l'élément de support.

5. Procédé selon la revendication 1, **caractérisé** en ce que l'on effectue les opérations suivantes pour fabriquer la prothèse avec la base :
1. fabrication des parois des mâchoires supérieure et inférieure, par exemple en cire dentaire dure, pour l'enregistrement de l'occlusion;
2. repérage de centrage, à savoir optimisation de la position de la mâchoire supérieure par rapport à la mâchoire inférieure;
3. montage articulé de l'élément repéré selon le point 2 avec la mâchoire inférieure;
4. mise en place de l'ensemble des dents dans de la cire pour essayage;
5. vérification de l'esthétique et de la phonétique;
6. enrobage des dents montées sur cire avec la base dans un moufle, la liaison des dents avec la base étant effectuée au moyen d'une masse de matière synthétique.

6. Procédé selon la revendication 5, **caractérisé** en ce qu'après l'opération 1, on place la base de la mâchoire supérieure par rapport au crâne dans un articulateur individuel à l'aide d'un arc facial.

7. Procédé selon la revendication 5**, caractérisé** en ce qu'après l'opération 3, on effectue la morsure de témoin en protrusion pour ajuster l'angle condylien; c'est-à-dire que l'angle condylien sur le crâne est reporté sur l'articulateur.

8. Procédé selon la revendication 7, **caractérisé** en ce que l'on prend un moulage de l'équateur de la langue pour déterminer le plan de mastication.

9. Procédé selon la revendication 5, **caractérisé** en ce qu'après l'opération 5, on effectue un moulage musculaire extérieur du côté vestibulaire dans la zone de la troisième à la sixième dent des mâchoires supérieure et inférieure, c'est-à-dire que l'on adapte la prothèse aux muscles.
